# EUROPÄISCHE PATENTSCHRIFT

(11) **EP 0 799 741 B1**
(45) Veröffentlichungstag und Bekanntmachung des Hinweises auf die Patenterteilung: **12.06.2002**
(21) Anmeldenummer: 97104564.6
(22) Anmeldetag: 18.03.1997
(51) Int. Cl.: B60N 2/26, B60N 2/36

(54) **Kraftfahrzeugsitz mit einem schwenkbaren Sitzteil**
Automotive vehicle seat with tiltable seat part
Siège de véhicule automobile à assise rabattoble

(30) Priorität: 02.04.1996 DE 19613220
(43) Veröffentlichungstag der Anmeldung: 08.10.1997
(73) Patentinhaber: ADAM OPEL AG, 65423 Rüsselsheim (DE)
(72) Erfinder: Gimbel, Hans-Peter, Dipl.-Ing., 65468 Trebur (DE)

(56) Entgegenhaltungen:
- DE-A- 2 723 758
- DE-A- 3 546 147
- DE-C- 3 531 934
- DE-U- 8 711 357
- GB-A- 2 017 807
- US-A- 4 475 769

## Beschreibung

Die Erfindung betrifft einen Kraftfahrzeugsitz mit einem schwenkbaren Sitzteil, insbesondere einem Sitzkissen, welches mittels mindestens einer Scharnierverbindung aus einer Gebrauchslage, beispielsweise einer etwa horizontalen Lage, in eine andere Gebrauchslage, beispielsweise eine etwa vertikale Lage, verschwenkbar ist.

Kraftfahrzeugsitze dieser Art sind beispielsweise aus der DE-U-87 11 357.0 bekannt, bei der zum Schwenken eines Sitzkissens um eine quer zur Fahrtrichtung gestellte Schwenkachse eine Scharnierverbindung vorgesehen ist, welche zwei karosserieseitige Beschlagteile mit jeweils einem Führungsbolzen aufweist, die in entsprechende Bolzenaufnahmen an den sitzseitigen Beschlagteilen drehbar eingreifen. Obwohl zum Vereinfachen der Montage die Führungsbolzen der karosserieseitigen Beschlagteile unterschiedlich lang ausgebildet sind, müssen dennoch bei der Montage eines solchen Sitzkissens im Kraftfahrzeug komplizierte Einfädelungs- und Sicherungsoperationen durchgeführt werden.

Es ist Aufgabe der Erfindung, einen gattungsgemäßen Kraftfahrzeugsitz derart zu verbessern, daß bei einfacher konstruktiver Ausbildung der Scharnierverbindung der Fertigungsaufwand und die Montagezeit des Sitzteils im Kraftfahrzeug reduziert sind.

Erfindungsgemäß ist diese Aufgabe dadurch gelöst, daß die Schwenkachse der Scharnierverbindung durch mindestens einen gegen die Kraft einer Feder axial nachgiebigen, in am Sitzteil oder an der Karosserie befindlichen Lagerbohrungen gelagerten Rastbolzen gebildet ist, wobei an der Karosserie oder am Sitzteil mindestens eine Rastbohrung zur spielfreien Aufnahme des Rastbolzens vorgesehen ist.

Durch eine derartige Ausbildung der Schwenkachse kann das schwenkbare Sitzteil in einfacher Weise rastend mit der Karosserie verbunden werden, ohne daß hierzu komplizierte, kaum automatisierbare Montageoperationen wie Ausrichtung und Einfädelung der Scharnierbolzen bzw. der Bolzenaufnahmen notwendig sind.

Gemäß einer bevorzugten Ausführung der Erfindung sind die Lagerbohrungen an den freien Schenkeln eines U-förmigen, mit dem Sitzteil verbundenen Beschlagteils und die Rastbohrungen an den freien Schenkeln eines mit der Karosserie verbundenen, ebenfalls U-förmigen Beschlagteils angeordnet. Diese Ausbildung ermöglicht den Rastbolzen sowie das sitzseitige Beschlagteil mit dem Sitzteil vorzumontieren und als komplettes Bauteil dieses Sitzteil im Kraftfahrzeug einzubauen.

Konstruktiv besonders einfach ist der Rastbolzen gestaltet, wenn dieser durch zwei koaxial angeordnete und gegen die Kraft der Feder axial verschiebbare Bolzenteile gebildet ist, deren freie Enden im montierten Zustand in die Rastbohrungen eingreifen. Die Mantelflächen an den Enden der Bolzenteile können dabei zum Reduzieren des Spiels in den Rastbohrungen und somit auch der Klappergeräusche an den Raststellen kegelförmig ausgebildet sein.

Die Bolzenteile sind mit sehr geringem baulichen Aufwand besonders stabil ausgeführt, wenn sie teleskopartig ineinanderschiebbar ausgebildet sind, wobei mindestens einer der beiden Bolzenteile im Teleskopierbereich rohrförmig ausgebildet ist. Die die beiden Bolzenteile beaufschlagende Feder kann dabei zwischen den Bolzenteilen in der rohrförmigen Ausnehmung angeordnet sein. Dadurch bilden die Bolzenteile und die Feder eine kompakte Einheit, die auf einfache Weise am sitzseitigen Beschlagteil montierbar ist.

Eine alternative Ausbildung des Rastbolzens sieht vor, daß die Bolzenteile und die Feder innerhalb einer Führungshülse angeordnet sind, welche an beiden Enden Anschläge zum Begrenzen der axialen Verschiebbarkeit der Bolzenteile aufweist. Der jeweilige Anschlag kann dabei durch Verringerung des Durchmessers (Verjüngung) oder durch Einprägungen gebildet werden.

In weiterer vorteilhafter Ausgestaltung der Erfindung läßt sich die Montage des Sitzteils im Kraftfahrzeug dadurch noch weiter vereinfachen, daß an den Schenkeln des karosserieseitigen Beschlagteils trichterförmige, zu den Rastbohrungen verlaufende Sicken zum Führen der Bolzenteile bei der Montage des Sitzteils vorgesehen sind. Diese trichterförmigen Sicken können oberhalb der Rastbohrungen angeordnet und annähernd vertikal ausgerichtet sein. Bei der Montage des Sitzteils im Kraftfahrzeug müssen zunächst die Bolzenteile in die trichterförmige Sikken eingeführt werden. Durch eine einfache Abwärtsbewegung des Sitzteils rasten dann diese Bolzenteile an den unterhalb der Sicken angeordneten Rastbohrungen ein.

Die Erfindung läßt zahlreiche Ausführungsmöglichkeiten zu und wird anhand der Zeichnung näher erläutert. Diese zeigt teilweise schematisch in
- Fig. 1: eine Seitenansicht eines im Fond angeordneten Kraftfahrzeugsitzes mit einem schwenkbaren Sitzkissen;
- Fig. 2: einen horizontalen Schnitt durch die Scharnierverbindung gemäß Fig. 1 im Bereich des Rastbolzens, vergrößert dargestellt;
- Fig. 3: eine Darstellung gemäß Fig. 2, jedoch mit noch nicht eingerasteten Bolzenteilen;
- Fig. 4: eine Ansicht von vorne auf die Scharnierverbindung gemäß Fig. 1, teilweise geschnitten im Bereich der rohrförmigen Bolzenteile;
- Fig. 5: eine alternative Ausbildung des Rastbolzens gemäß Fig. 4;
- Fig. 6: eine räumliche Ansicht des sitzseitigen Beschlagteils mit montiertem Rastbolzen;
- Fig. 7: eine räumliche Ansicht des karosserieseitigen Beschlagteils mit trichterförmigen Sicken.

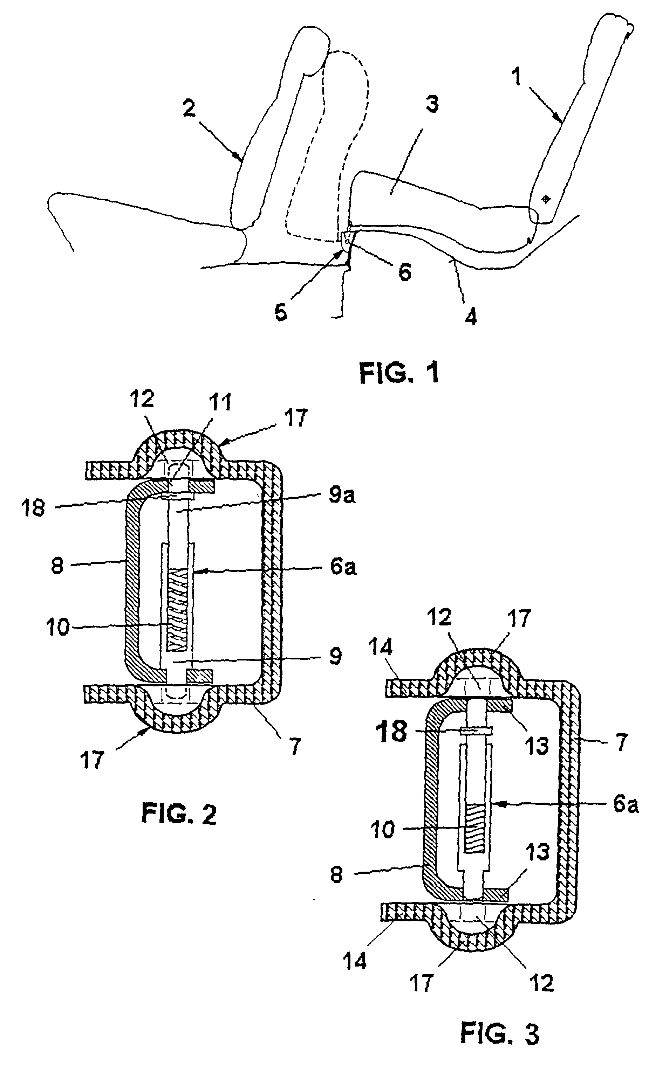

Die Fig. 1 zeigt eine Seitenansicht von zwei innerhalb eines nicht dargestellten Fahrgastraumes hintereinander angeordneten Kraftfahrzeugsitzen 1, 2, wovon der hintere Kraftfahrzeugsitz 1 mit einem schwenkbaren Sitzkissen 3 ausgebildet ist. Mit unterbrochenen Linien ist dessen hochgeschwenkte Position angedeutet. Man erkennt weiterhin am Bodenbereich eine Karosserie 4 sowie eine Scharnierverbindung 5 mit einer Schwenkachse 6, um welche sich das Sitzkissen 3 bei der Überführung in die etwa vertikale Lage dreht. In dieser Seitenansicht ist nur eine Scharnierverbindung 5 ersichtlich. Zum Schwenken des Sitzkissens 3 sind jedoch zwei quer zur Fahrtrichtung beabstandet angeordnete Scharnierverbindungen 5 mit koaxial ausgerichteten Schwenkachsen 6 vorgesehen.

Fig. 2 und 3 verdeutlichen den Aufbau der Scharnierverbindung 5, welche im wesentlichen ein karosserieseitiges Beschlagteil 7, ein sitzseitiges Beschlagteil 8 sowie eine durch den Rastbolzen 6a gebildete Schwenkachse 6 aufweist. Die Beschlagteile 7, 8 sind im Querschnitt U-förmig ausgebildet und auf eine nicht näher dargestellte Weise entsprechend mit der Karosserie 4 bzw. mit einem Rahmen des Sitzkissens 3 verbunden. Das sitzseitige Beschlagteil 8 weist dabei mit seiner offenen Seite zum karosserieseitigen Beschlagteil 7 hin und ist mit Spiel zwischen dessen Schenkeln 14 angeordnet.

Die schwenkbare Verbindung zwischen den beiden Beschlagteilen 7, 8 ermöglicht der Rastbolzen 6a, welcher in Lagerbohrungen 11 am sitzseitigen Beschlagteil 8 aufgenommen ist und mit seinen Enden mit den am karosserieseitigen Beschlagteil 7 vorgesehenen Rastbohrungen 12 im Eingriff steht. Der Rastbolzen 6a besteht dabei aus zwei teleskopisch ineinanderschiebbaren Bolzenteilen 9, 9a und einer die Bolzenteile 9, 9a bis zum Anschlag gegen die Schenkel 13 des sitzseitigen Beschlagteils 8 auseinanderspreizenden Schraubenfeder 10, welche im Hohlraum des rohrförmigen Bolzenteils 9 angeordnet ist. Das Bolzenteil 9a ist bei dieser Ausführung als ein zylindrischer Körper mit einem Anschlagbund 18 ausgebildet.

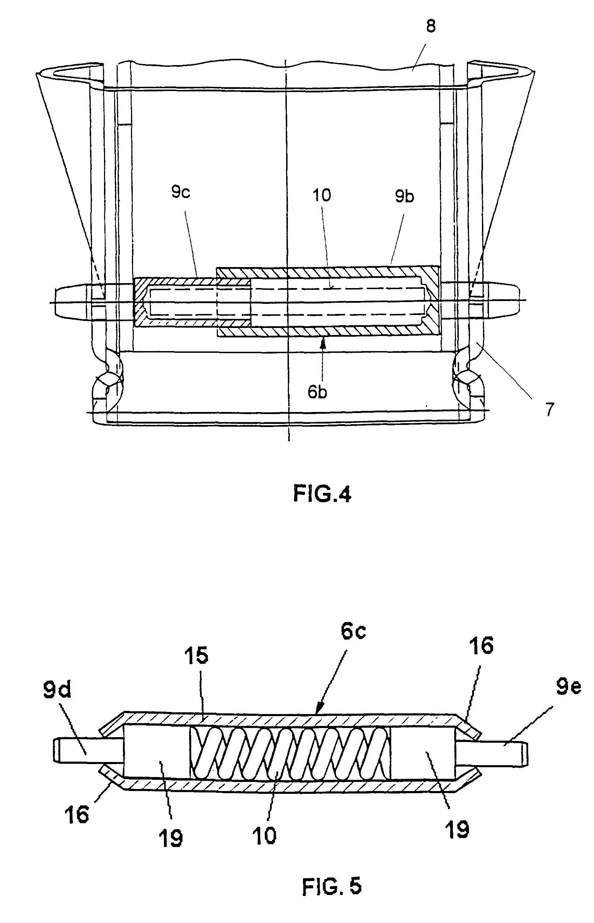

Bei der Ausbildung des Rastbolzens 6b gemäß Fig. 4 sind beide Bolzenteile 9b, 9c rohrförmig ausgebildet. Dies ermöglicht die Länge des Rastbolzens 6b und somit auch die Abmessungen der Scharnierverbindung 5 zu reduzieren, da die Schraubenfeder 10 in den Hohlräumen der beiden Bolzenteile 9b, 9c angeordnet werden kann.

In Fig. 5 ist eine alternative Ausführung des Rastbolzens 6c dargestellt, bei der die beiden Bolzenteile 9d, 9e innerhalb einer Führungshülse 15 verschiebbar angeordnet sind. Dazu sind diese Bolzenteile 9d, 9e mit jeweils einem kolbenähnlichen Führungsteil 19 ausgebildet. Die zwischen den Bolzenteilen 9d, 9e angeordnete Schraubenfeder 10 spreizt dabei die Bolzenteile 9d, 9e bis zu den Anschlägen 16 auseinander, welche an beiden Enden der Führungshülse 15 vorgesehen sind. Die Anschläge 16 sind bei dieser Ausführung nach der Montage der Bolzenteile 9d, 9e und der Schraubenfeder 10 durch Verringerung des Durchmessers (Verjüngung) der Enden der Führungshülse 15 gebildet.

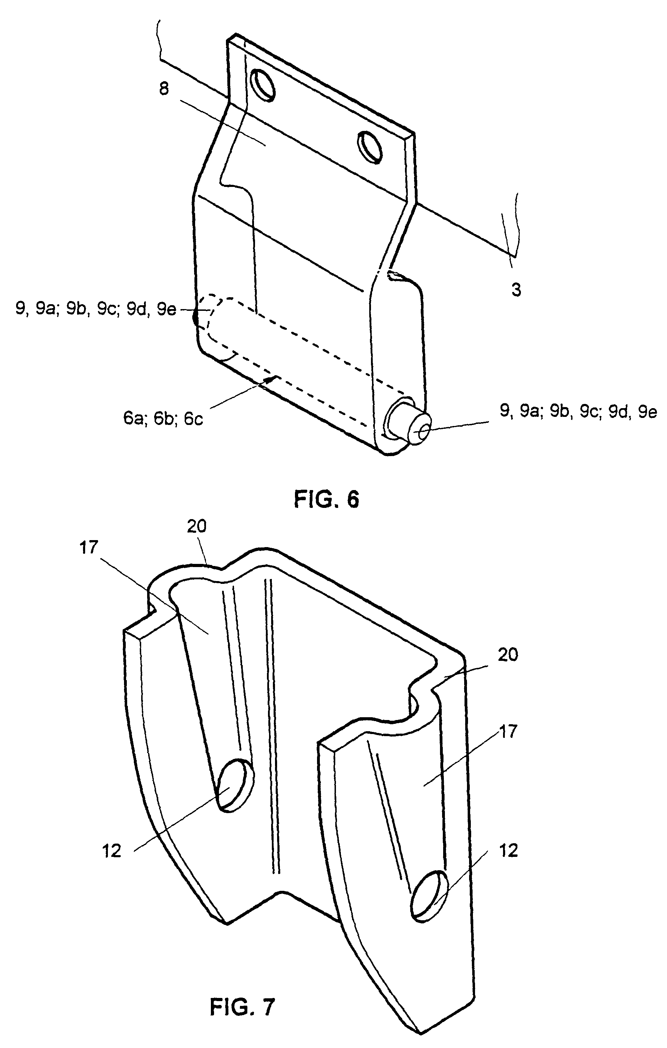

Zum Erleichtern des Einführungs- und Rastvorgangs für den Rastbolzen 6a; 6b; 6c sind am karosserieseitigen Beschlagteil 7 trichterförmige Sicken 17 vorgesehen, welche wie in Fig. 6 und 7 dargestellt oberhalb der Rastbohrungen 12 ausgebildet sind. Diese Sicken 17 sind etwa vertikal ausgerichtet und 17 im oberen Bereich 20 derart dimensioniert, daß der am sitzseitigen Beschlagteil 8 vormontierte Rastbolzen 6a; 6b; 6c relativ einfach in die Sicken 17 eingeführt werden kann. Beim weiteren Absenken des Sitzkissens 3 rasten dann die Bolzenteile 9, 9a; 9b, 9c; 9d, 9e zwangsläufig in den Rastbohrungen 12 ein.

Durch die erfindungsgemäße Ausbildung des Kraftfahrzeugsitzes 1 kann die Montage des Sitzkissens 3 im Kraftfahrzeug stark vereinfacht werden, da der mit dem sitzseitigen Beschlagteil 8 verbundene und von der Schraubenfeder 10 beaufschlagte Rastbolzen 6a; 6b; 6c in die Sicken 17 des karosserieseitigen Beschlagteils 7 einführbar und beim weiteren Absenken des Sitzkissens 3 in den am karosserieseitigen Beschlagteil 7, unterhalb der Sicken 17 angeordneten Rastbohrungen 12 verrastbar ausgebildet ist; ein kompliziertes Einfädeln der Schwenkachse 6 sowie Schraub- und Sicherungsarbeiten während der Montage des Kraftfahrzeugsitzes 1 sind nicht mehr erforderlich.

## Patentansprüche

1. Kraftfahrzeugsitz mit einem schwenkbaren Sitzteil, insbesondere einem Sitzkissen, welches mittels mindestens einer Scharnierverbindung aus einer Gebrauchslage, beispielsweise einer etwa horizontalen Lage, in eine andere Gebrauchslage, beispielsweise eine etwa vertikale Lage, verschwenkbar ist, **dadurch gekennzeichnet, daß** die Schwenkachse (6) der Scharnierverbindung (5) durch mindestens einen gegen die Kraft einer Feder (10) axial nachgiebigen, in am Sitzteil (3) oder an der Karosserie (4) befindlichen Lagerbohrungen (11) gelagerten Rastbolzen (6a; 6b; 6c) gebildet ist, wobei an der Karosserie (4) oder am Sitzteil (3) mindestens eine Rastbohrung (12) zur spielfreien Aufnahme des Rastbolzens (6a; 6b; 6c) vorgesehen ist.

2. Kraftfahrzeugsitz nach Anspruch 1, **dadurch gekennzeichnet, daß** die Lagerbohrungen (11) an den freien Schenkeln (13) eines U-förmigen, mit dem Sitzteil (3) verbundenen Beschlagteils (8) und die Rastbohrungen (12) an den freien Schenkeln (14) eines mit der Karosserie (4) verbundenen, ebenfalls U-förmigen Beschlagteils (7) angeordnet sind.

3. Kraftfahrzeugsitz nach Anspruch 1 oder 2, **dadurch gekennzeichnet, daß** der Rastbolzen (6a; 6b; 6c) durch zwei koaxial angeordnete und gegen die Kraft der Feder (10) axial verschiebbare Bolzenteile (9, 9a; 9b, 9c; 9d, 9e) gebildet ist, deren freie Enden im montierten Zustand in die Rastbohrungen (12) eingreifen.

4. Kraftfahrzeugsitz nach Anspruch 3, **dadurch gekennzeichnet, daß** die Enden der Bolzenteile (9, 9a; 9b, 9c; 9d, 9e) im Bereich der Rastbohrungen (12) zum Spielausgleich kegelförmig ausgebildet sind.

5. Kraftfahrzeugsitz nach Anspruch 3 oder 4, **dadurch gekennzeichnet, daß** die Bolzenteile (9, 9a; 9b, 9c) teleskopartig ineinanderschiebbar ausgebildet sind, wobei mindestens einer (9; 9b) der beiden Bolzenteile (9, 9a; 9b, 9c) im Teleskopierbereich rohrförmig ausgebildet ist.

6. Kraftfahrzeugsitz nach Anspruch 3 oder 4, **dadurch gekennzeichnet, daß** die Bolzenteile (9d, 9e) und die Feder (10) innerhalb einer Führungshülse (15) angeordnet sind, welche an beiden Enden Anschläge (16) zum Begrenzen der axialen Verschiebbarkeit der Bolzenteile (9d, 9e) aufweist.

7. Kraftfahrzeugsitz nach einem der Ansprüche 1 bis 6, **dadurch gekennzeichnet, daß** an den Schenkeln (14) des karosserieseitigen Beschlagteils (7) trichterförmige, zu den Rastbohrungen (12) verlaufende Sikken (17) zum Führen der Bolzenteile (9, 9a; 9b, 9c; 9d, 9e) bei der Montage des Sitzteils (3) im Kraftfahrzeug vorgesehen sind.

8. Kraftfahrzeugsitz nach Anspruch 7, **dadurch gekennzeichnet, daß** die trichterförmigen Sicken (17) oberhalb der Rastbohrungen (12) angeordnet und annähernd vertikal ausgerichtet sind.

## Claims

1. Motor vehicle seat with a pivotable seat portion, in particular a seat cushion, which is pivotable by means of at least one hinge joint out of one working position, for example an approximately horizontal position, into another working position, for example an approximately vertical position, **characterised in that** the swivel pin (6) of the hinge joint (5) is formed by at least one latch bolt (6a; 6b; 6c) which is axially yielding against the force of a spring (10) and mounted in bearing bores (11) located on the seat portion (3) or on the vehicle body (4), wherein on the vehicle body (4) or on the seat portion (3) is provided at least one latch bore (12) for receiving the latch bolt (6a; 6b; 6c) without play.

2. Motor vehicle seat according to claim 1, **characterised in that** the bearing bores (11) are arranged on the free arms (13) of a U-shaped fitting (8) connected to the seat portion (3) and the latch bores (12) are arranged on the free arms (14) of an also U-shaped fitting (7) connected to the body (4).

3. Motor vehicle seat according to claim 1 or 2, **characterised in that** the latch bolt (6a; 6b; 6c) is formed by two bolt portions (9, 9a; 9b, 9c; 9d, 9e) which are arranged coaxially and axially slidable against the force of the spring (10) and whose free ends engage in the latch bores (12) in the assembled state.

4. Motor vehicle seat according to claim 3, **characterised in that** the ends of the bolt portions (9, 9a; 9b, 9c; 9d, 9e) are cone-shaped in the region of the latch bores (12) to compensate for play.

5. Motor vehicle seat according to claim 3 or 4, **characterised in that** the bolt portions (9, 9a; 9b, 9c) can be telescoped one inside the other, wherein at least one (9; 9b) of the two bolt portions (9, 9a; 9b, 9c) is tubular in the telescoping region.

6. Motor vehicle seat according to claim 3 or 4, **characterised in that** the bolt portions (9d, 9e) and the spring (10) are arranged within a guide bush (15) which comprises stops (16) at both ends for limiting the axial sliding capacity of the bolt portions (9d, 9e).

7. Motor vehicle seat according to any of claims 1 to 6, **characterised in that** on the arms (14) of the fitting (7) on the body side are provided funnel-shaped beads (17) extending to the latch bores (12) for guiding the bolt portions (9, 9a; 9b, 9c; 9d, 9e) on assembly of the seat portion (3) in the motor vehicle.

8. Motor vehicle seat according to claim 7, **characterised in that** the funnel-shaped beads (17) are arranged above the latch bores (12) and oriented approximately vertically.

## Revendications

1. Siège de véhicule automobile comprenant une partie de siège pivotante, en particulier un coussin de siège, qui, grâce à au moins une liaison de type charnière peut pivoter d'une position d'utilisation, par exemple d'une position sensiblement horizontale, dans une autre position d'utilisation, par exemple dans une position sensiblement verticale, **caractérisé en ce que** l'axe de pivotement (6) de la liaison de type charnière (5) est formée d'au moins un axe encliquetable (6a ; 6b ; 6c) qui s'engage dans des trous formant palier (11), aménagés sur la partie de siège (3) ou sur la carrosserie (4), et peut reculer axialement à l'encontre de la force d'un ressort (10), au moins un trou de encliquetage (12) étant prévu sur la partie de siège (3) ou sur la carrosserie (4) pour recevoir sans jeu l'axe encliquetable (6a ; 6b ; 6c).

2. Siège de véhicule automobile selon revendication 1, **caractérisé en ce que** les trous formant palier (11) sont disposés dans les ailes (13) libres d'une ferrure (8) en forme de U, liée à la partie de siège (3) et les trous d'encliquetage (12) sont disposés dans les ailes (14) libres d'une ferrure (7), également en forme de U, qui est liée à la carrosserie (4).

3. Siège de véhicule automobile selon revendication 1 ou 2, **caractérisé en ce que** l'axe encliquetable (6a ; 6b ; 6c) est formé de deux parties d'axe (9, 9a ; 9b, 9c ; 9d, 9e) coaxiales, qui peuvent coulisser axialement à l'encontre de la force du ressort (10) et dont les extrémités libres, à l'état monté, pénètrent dans les trous d'encliquetage (12).

4. Siège de véhicule automobile selon revendication 3, **caractérisé en ce que** les extrémités des parties d'axe (9, 9a ; 9b, 9c ; 9d, 9e), dans la région des trous d'encliquetage (12), sont coniques à des fins de compensation du jeu.

5. Siège de véhicule automobile selon revendication 3 ou 4, **caractérisé en ce que** les parties d'axe (9, 9a ; 9b, 9c) peuvent coulisser l'une dans l'autre de manière télescopique, au moins une (9 ; 9b) des deux parties d'axe (9, 9a ; 9b, 9c) ayant une conformation tubulaire dans la zone télescopique.

6. Siège de véhicule automobile selon revendication 3 ou 4, **caractérisé en ce que** les parties d'axe (9d, 9e) et le ressort (10) sont disposés à l'intérieur d'un manchon de guidage (15) qui, à ses deux extrémités, présente des butées (16) pour limiter le déplacement axial des parties d'axe (9d, 9e).

7. Siège de véhicule automobile selon une des revendications 1 à 6, **caractérisé en ce qu'**il est prévu, dans les ailes (14) de la ferrure (7) associées à la carrosserie, des conformations en entonnoir (17) menant aux trous d'encliquetage (12) pour le guidage des parties d'axe (9, 9a ; 9b, 9c ; 9d, 9e) lors du montage de la partie de siège (3) dans le véhicule.

8. Siège de véhicule automobile selon revendication 7, **caractérisé en ce que** les conformations en entonnoir (17) sont disposées au dessus des trous d'encliquetage (12) et sont sensiblement verticaux.
